# EUROPEAN PATENT SPECIFICATION

(11) **EP 3 381 644 B1**
(45) Date of publication and mention of the grant of the patent: **16.08.2023**
(21) Application number: 18164494.9
(22) Date of filing: 28.03.2018
(51) Int. Cl.: B29C 45/60, B29C 48/65, B29C 45/50

(54) **MOLDING MACHINE SCREW**
SCHNECKE FÜR EINE FORMMASCHINE
VIS DE MACHINE DE MOULAGE

(30) Priority: 30.03.2017 JP 2017068005
(43) Date of publication of application: 03.10.2018
(73) Proprietor: Sumitomo Heavy Industries, Ltd., Tokyo 141-6025 (JP)
(72) Inventor: SEIKE, Kouji, Chiba-shi, Chiba 263-0001 (JP); ISHIDA, Hironobu, Yokosuka-shi, Kanagawa 237-8555 (JP); MARUMOTO, Hirotsugu, Chiba-shi, Chiba 263-0001 (JP)
(74) Representative: Louis Pöhlau Lohrentz

(56) References cited:
- GB-A- 964 428
- JP-A- H05 309 720
- JP-A- 2014 117 811
- JP-B2- 2 519 575
- US-A- 6 139 179
- Donald V. Rosato ET AL: "Chapter 3: Plasticizing Screw Process - Barrier Screws" In: "Injection Molding Handbook", 1 January 1995 (1995-01-01), CHAPMAN & HALL, New York [u.a.], XP055492529, ISBN: 978-0-412-99381-7 pages 178-183, * page 178 - page 181; figures 3-15, 3-16 *

## Description

### BACKGROUND OF THE INVENTION

### Field of the Invention

Certain embodiments of the present invention relate to a molding machine screw.

### Description of Related Art

United States Patent US6139179 discloses an extruder screw with a first helical primary flight that extends substantially along the entire length of the extruder screw and a second helical primary flight that extends at least part-way along the feed section. The barrier section of the extruder screw defines first and second barrier flights positioned between the primary flights.

Moreover, screws with main flights and sub-flights are known from patent documents JP2519575B, JPH05309720, JP2014117811, and GB964428 and from the literature (Donald V. Rosato et al., Injection Molding Handbook, New York [u.a.], CHAPMAN & HALL, pages 178-183).

In an injection molding machine of the related art, in order to increase melting ability of a screw of an injection unit, a sub-flight is additionally installed to a single flight (for example, Japanese Unexamined Patent Application Publication No. 2002-283421) .

According to high cycle, a demand for transport capacity increases. If a rotating speed of the screw increases in order to satisfy the demand, supply of heat cannot catch up the rotating speed, and thus, an unmelted resin is discharged from a nozzle. That is, melting ability decreases.

It is considered to increase a set temperature in order to increase the supply of the heat. However, if the set temperature increases, a problem of the unmelted resin is eliminated. However, a resin temperature increases, and thus, a cooling time is lengthened.

### SUMMARY OF THE INVENTION

The present invention is made in consideration of the above-described problems, and an object thereof is to provide a molding machine screw capable of improving melting ability and decreasing a resin temperature of a transported molding material.

In order to achieve the above-described object, according to an aspect of the present invention, there is provided a molding machine screw, including: a plurality of main flights; and a plurality of sub-flights each of which branches from corresponding one main flight of the main flights, extends toward a tip end side of the molding machine screw, and is connected to other main flight adjacent to the tip end side, in which the moldingmachine screw is divided into a feeding zone, a compression zone, and a metering zone from a base end side, in which the main flight is provided from an intermediate position of the feeding zone to the tip end side of the molding machine screw, in which one base end flight is provided on the base end side of the feeding zone, and in which a region without flight is provided between the main flight and the base end flight.

According to the aspect of the present invention, it is possible to provide a molding machine screw capable of improving melting ability and decreasing a resin temperature of a transported molding material.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a schematic configuration of a molding machine screw according to a first example not being part of the invention.
Fig. 4 is a sectional view showing a positional relationship between main flights and sub-flights around an axis of the screw.
Fig. 5 is a sectional view showing a positional relationship between the main flights and the sub-flights in an axial direction of the screw.
Fig. 6 is a graph in which transport capacity of the screw of the first example not being part of the invention and transport capacity of a single-flight screw of the related art are compared with each other.
Fig. 7 is a graph in which a resin temperature in the screw of the first embodiment and a resin temperature of the single-flight screw of the related art are compared with each other.
Fig. 8 is a view showing a schematic configuration of a molding machine screw according to the invention.

### DETAILED DESCRIPTION OF THE INVENTION

Hereinafter, embodiments will be described with reference to the accompanying drawings. In order to facilitate understanding of descriptions, the same reference numerals are assigned to the same constituent elements in each drawing as much as possible, and overlapping descriptions thereof are omitted.

### First example not being part of the invention

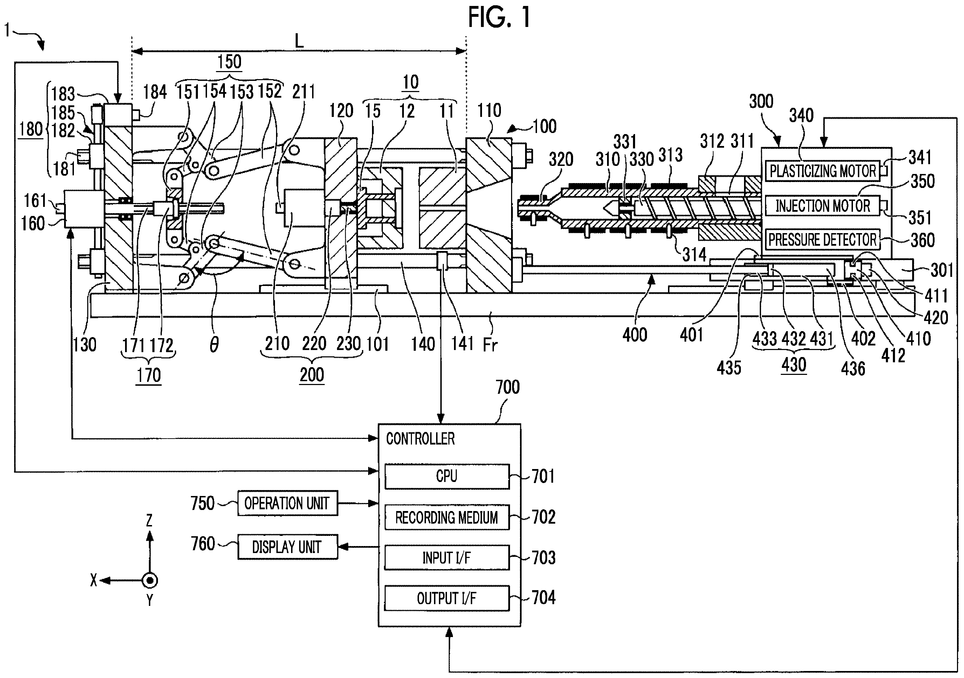

A first example not being part of the invention will be described with reference to Figs. 1 to 7. In addition, in Figs. 1 to 5, an X direction, a Y direction, and a Z direction are directions orthogonal to each other. The X direction and the Y direction are a horizontal direction, and the Z direction is a vertical direction. The X direction is the same as a movement direction of a movable platen 120 or an injection unit 300 of an injection molding machine 1 according to the present embodiment or mold opening and closing direction of the injection molding machine 1, and the Y direction is a width direction of the injection molding machine 1.

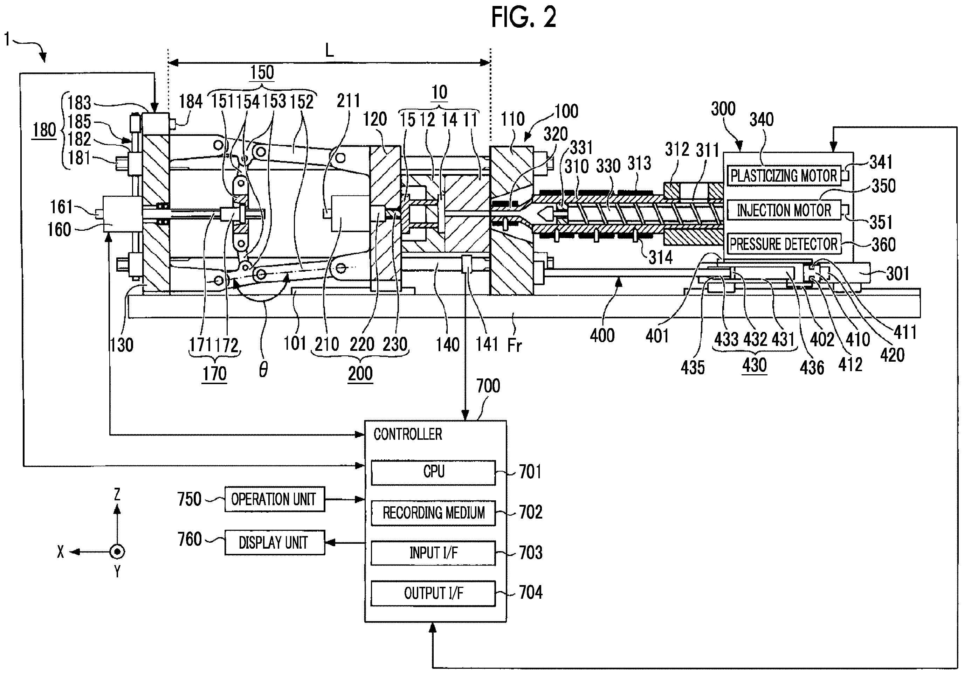

First, a schematic configuration of the entire injection molding machine 1 according to the present invention will be described with reference to Figs. 1 and 2.

### Injection Molding Machine

Fig. 1 is a view showing a state when a mold opening of the injection molding machine 1 according to an embodiment is completed. Fig. 2 is a view showing a state when a mold of the injection molding machine 1 according to the embodiment is clamped. As shown in Figs. 1 and 2, the injection molding machines include a mold clamping unit 100, an ejector unit 200, an injection unit 300, a movement unit 400, and a controller 700. Hereinafter, each component of the injection molding machine will be described.

### Mold Clamping Unit

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 10. For example, the mold clamping unit 100 is a horizontal type clamping unit and mold opening and closing directions are a horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 is moved forward or rearward with respect to the stationary platen 110, and thus, closing, clamping, and opening of the mold are performed. The mold unit 10 is configured of the stationary mold 11 and the movable mold 12.

The toggle support 130 is connected to the stationary platen 110 with a gap therebetween, and is placed on the frame Fr to be movable in mold opening and closing directions . In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (forexample, four) tie bars 140 may be used. The tie bars 140 are parallel in the mold opening and closing directions and extend according to a mold clamping force. A tie bar strain detector 141 which detects strain of the tie bar 140 is provided in at least one tie bar 140. The tie bar strain detector 141 sends signals indicating the detection results to the controller 700. The detection results of the tie bar strain detector 141 are used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and the attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 is configured of a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or the like and the second link 153 is attached to the toggle support 130 so as to be oscillated by pins or the like. The second link 153 is attached to the crosshead 151 via a third link 154. If the crosshead 151 is moved forward or rearward with respect to the toggle support 130, the first link 152 and the second link 153 are bent and stretched and the movable platen 120 is moved forward or rearward with respect to the toggle support 130.

In addition, the configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 is moved forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 is moved forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends signals indicating the detection results to the controller 700.

In the mold clamping process, the mold clamping motor 160 is further driven to further move the crosshead 151 forward from the mold closing completion position to a mold clamping position, and thus, a mold clamping force is generated. When the mold is clamped, a cavity space 14 is formed between the movable mold 12 and the stationary mold 11, and the cavity space 14 is filled with a liquid molding material by the injection unit 300. A filled molding material is solidified, and thus, a molding product is obtained. A plurality of cavity spaces 14 may be provided, and in this case, a plurality of molding products maybe simultaneously obtained.

In the mold opening process, the mold clamping motor 160 is driven to move the crosshead 151 rearward to a mold opening completion position at a set speed. Accordingly, the movable platen 120 is moved rearward, and the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, a speed or positions (including a speed switching position, a mold closing completion position, and a mold clamping position) of the crosshead 151 in the mold closing process and the mold clamping process are collectively set as a series of setting conditions . In addition, instead of the speed, the positions, or the like of the crosshead 151, a speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by replacement of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 becomes a predetermined angle at the time of a mold touch where the movable mold 12 comes into contact with the stationary mold 11.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated. In addition, it is possible to rotate the plurality of screw nuts 182 individually by changing a transmission path of the rotation transmission portion 185.

For example, the rotation transmission portion 185 is configured of a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends signals indicating the detection results to the controller 700. The detection results of the mold space adjustment motor encoder 184 are used to monitor or control the position of the toggle support 130 or the gap L.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motors 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The lower mold and the upper mold configure the mold unit. The lower mold may be attached to the lower platen via a rotary table. The toggle support is disposed below the lower platen and is connected to the upper platen via the tie bar. The upper platen and the toggle support are connected to each other in mold opening and closing directions by the tie bar with a gap therebetween. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### Ejector Unit

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is open is defined as the rear side.

The ejector unit 200 ejects the molding product from the mold unit 10. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can be moved forward or rearward through a through-hole of the movable platen 120. A front end portion of the ejector rod 230 comes into contact with a movable member 15 which is disposed to be movable forward or rearward inside the movable mold 12. The front end portion of the ejector rod 230 may be connected to the movable member 15 or may not be connected to the movable member 15.

The ejector unit 200 performs an ejection process under the control of the controller 700.

In the ejection process, the ejector motor 210 is driven to move the ejector rod 230 forward from a standby position to an ejection position at a set speed, and thus, the movable member 15 is moved forward and the molding product is ejected. Thereafter, the ejector motor 210 is driven to move the ejector rod 230 rearward at a set speed, and thus, the movable member 15 is moved rearward to an original standby position . For example, a position or speed of the ejector rod 230 is detected using an ejector motor encoder 211. The ejector motor encoder 211 detects the rotation of the ejector motor 210 and sends signals indicating the detection results to the controller 700.

### Injection Unit

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame Fr, and is movable forward or rearward with respect to the mold unit 10. The injection unit 300 comes into contact with the mold unit 10, and thus, the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 10. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 is moved rearward. Thereafter, if the screw 330 is moved forward, the liquid molding material accumulated in front of the screw 330 is injected from the nozzle 320 and the inside of the mold unit 10 is filled with the liquid molding material.

A backflow prevention ring 331 is attached to a front portion of the screw 330 to be movable forward or rearward as a backflow prevention valve which prevents a backflow of the molding material from the front side of the screw 330 toward the rear side when the screw 330 is pushed forward.

When the screw 330 is moved forward, the backflow prevention ring 331 is pushed toward the rear side by the pressure of the molding material in front of the screw 330 and is moved rearward relative to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and is moved forward relative to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward relative to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder or the like, for example.

The pressure detector 360 detects a pressure transmitted between the injection motor 350 and the screw 330. The pressure detector 360 is provided on a pressure transmission path between the injection motor 350 and the screw 330 and detects a pressure applied to the pressure detector 360.

The pressure detector 360 sends signals indicating the detection results to the controller 700. The detection results of the pressure detector 360 are used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 14 inside the mold unit 10 is filled with the liquid molding material accumulated in front of the screw 330. For example, a position or speed of the screw 330 is detected using an injection motor encoder 351. The injection motor encoder 351 detects the rotation of the injection motor 350 and sends signals indicating the detection results to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may be moved forward or may be moved rearward at a very slow speed.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 10. Insufficient molding materials can be replenished by cooling shrinkage in the mold unit 10. For example, the holding pressure is detected using the pressure detector 360. The pressure detector 360 sends signals indicating the detection results to the controller 700. A set value of the holding pressure may be changed according to an elapsed time from the starting of the holding pressure process, or the like.

In the holdingpressure process, the molding material inside the cavity space 14 in the mold unit 10 is gradually cooled, and when the holding pressure process is completed, an inlet of the cavity space 14 is closed by the molding material which is solidified. This state is referred to as a gate seal, and a backflow of the molding material from the cavity space 14 is prevented. After the holding pressure process, a cooling process starts. In the cooling process, solidification of the molding material in the cavity space 14 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 is moved rearward as the liquid molding material is fed to the front side of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends signals indicating the detection results to the controller 700.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends signals indicating the detection results to the controller 700. If the screw 330 is moved rearward to a plasticizing completion position and a predetermined amount of the molding materials is accumulated in front of the screw 330, the plasticizing process is completed.

In addition, the injection unit 300 of the present embodiment is an inline and screw type injection unit. However, the injection unit 300 may be a preplasticizing type injection unit. The preplasticizing type injection unit supplies a melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### Movement Unit

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 10. In addition, the movement unit 400 presses the nozzle 320 to the mold unit 10 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquidpressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and by rotation torque corresponding to the control signals from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 is moved forward, and thus, the nozzle 320 is pressed to the stationary mold 11. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 is moved rearward and thus, the nozzle 320 is separated from the stationary mold 11.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### Controller

For example, as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is referred to as "shot" or a "molding cycle" . In addition, a time required for once shot is also referred to as a "molding cycle time".

The controller 700 is connected to an operation unit 750 or the display unit 760. The operation unit 750 receives an input operation from a user and outputs signals corresponding to the input operation to the controller 700. The display unit 760 displays an operation screen corresponding to the input operation of the operation unit 750 under the control of the controller 700.

The operation screen is used for the setting of the injection molding machine 1 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine or the like.

For example, the operation unit 750 and the display unit 760 may be configured of a touch panel to be integrated with each other. In addition, in the present embodiment, the operation unit 750 and the display unit 760 are integrated with each other. However, the operation unit 750 and the display unit 760 may be provided to be independent to each other. In addition, a plurality of operation units 750 may be provided.

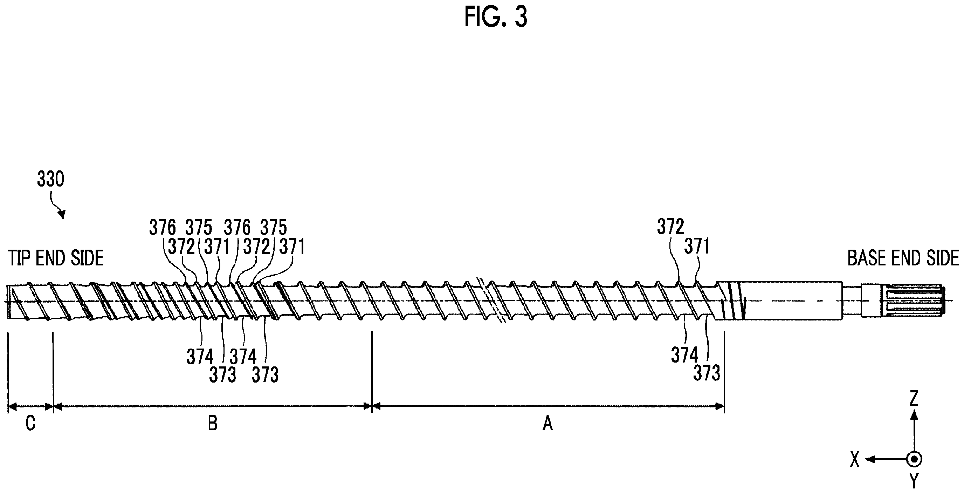

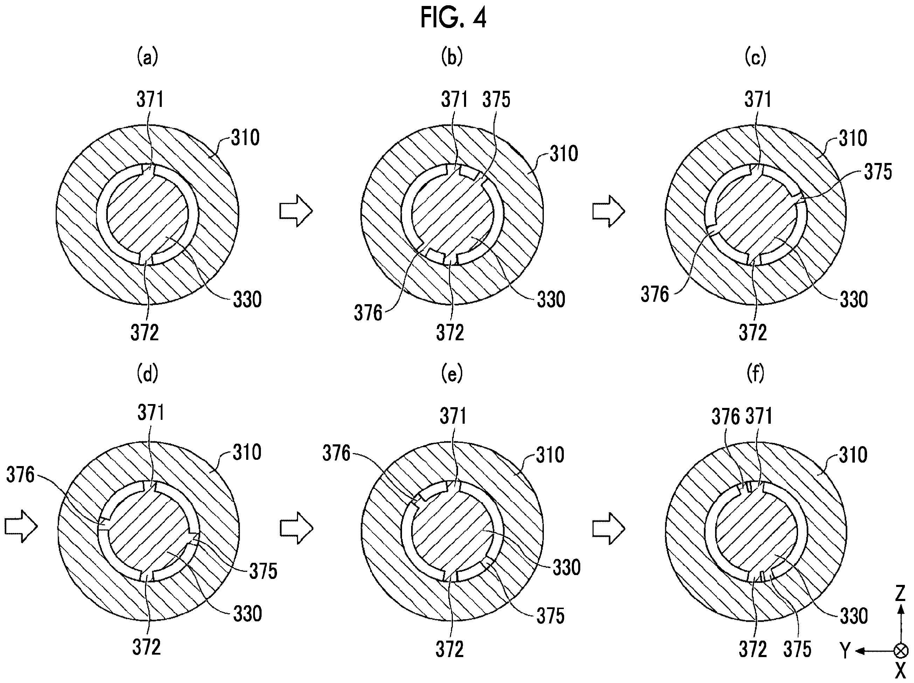

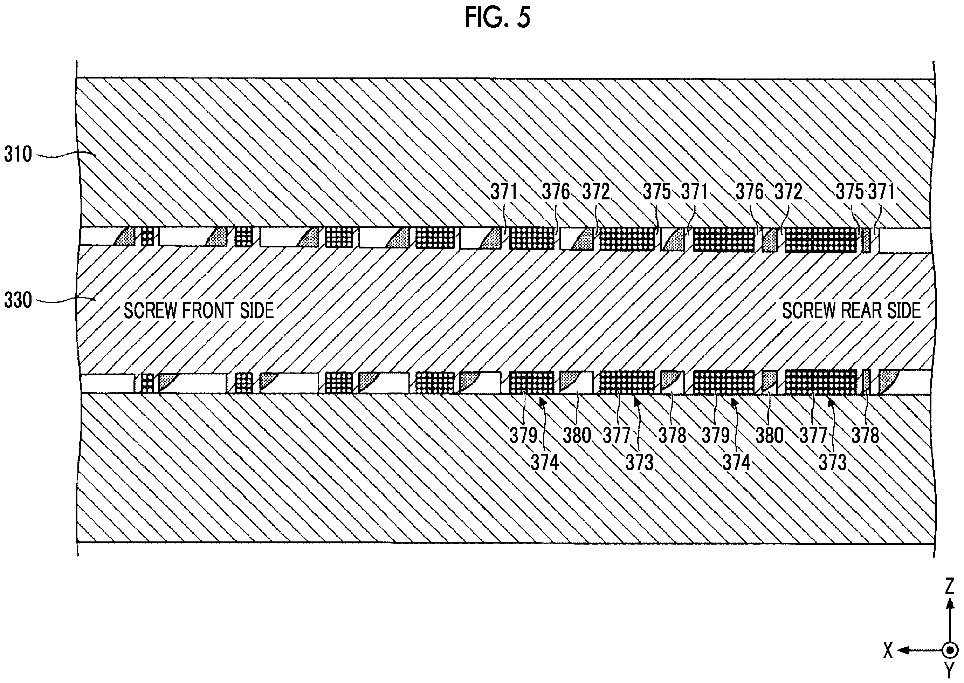

Next, a configuration of the screw 330 (molding machine screw) of the injection unit 300 which is a main portion of the first example not being part of the invention will be described in detail with reference to Figs. 3 to 5. Fig. 3 is a schematic configuration of the molding machine screw 330 according to the first an example not being part of the invention. Fig. 4 is a sectional view showing a positional relationship between main flights 371 and 372 and sub-flights 375 and 376 around an axis of the screw 330. Fig. 5 is a sectional view showing a positional relationship between the main flights 371 and 372 and the sub-flights 375 and 376 in an axial direction of the screw 330.

As shown in Fig. 3, the screw 330 is divided into a feeding zone A, a compression zone B, and a metering zone C which are disposed from a base end of the screw 330 toward a tip end thereof.

The feeding zone A is a region in which a solid resin pellet (molding material) supplied from the supply port 311 of the cylinder 310 is transported while being heated toward the tip end of the screw 330. The compression zone B is a region in which the resin which is preheated in the feeding zone A and is partially melted is pressurized and compressed to supply mechanical energy and melting of the resin is promoted. The metering zone C is a region in which homogenization of the resin whose melting is substantially completed in the compression zone B is promoted and rectified.

The screw 330 includes two main flights configured of a first main flight 371 and a second main flight 372. The first main flight 371 and the second main flight 372 are provided over all the zones of the feeding zone A, the compression zone B, and the metering zone C of the screw 330. The first main flight 371 and the second main flight 372 are spirally provided at equal pitch intervals from the base end of the screw 330 toward the tip end and are disposed with a phase difference of 180°. In addition, each of the first main flight 371 and the second main flight 372 has a variable pitch.

A first groove 373 includes a push-flight side of the first main flight 371 and a pull-flight side of the second main flight 372. The second groove 374 includes a push-flight side of the second main flight 372 and a pull-flight side of the first main flight 371. In order words, the first groove 373 is a screw groove which is formed between the base end-side first main flight 371 and the tip end-side second main flight 372, and the second groove 374 is a screw groove which is formed between the base end-side second main flight 372 and the tip end-side first main flight 371.

In the feeding zone A and the metering zone C, depths of the first grooves 373 and the second grooves 374 are constant, and the depth of each groove in the feeding zone A is larger than that in the metering zone C. In the compression zone B, the depths of the first grooves 373 and the second grooves 374 gradually decrease toward the tip end of the screw 330.

Moreover, the screw 330 includes two sub-flights configured of a first sub-flight 375 and a second sub-flight 376.

The first sub-flight 375 is configured to be derived from the push-flight side of the first main flight 371 and to be terminated on the pull-flight side of the second main flight 372 in the first groove 373. The second sub-flight 376 is configured to be derived from the push-flight side of the second main flight 372 and to be terminated on the pull-flight side of the first main flight 371 in the second groove 374.

More specifically, the first sub-flight 375 has a pitch larger than that of the first main flight 371, branches from the first main flight 371, extends toward the tip end side of the screw 330 with a lead angle larger than that of the first main flight 371, and is connected to the second main flight 372 adjacent to the tip end side. Similarly, the second sub-flight 376 has a pitch larger than that of the second main flight 372, branches from the second main flight 372, extends toward the tip end side of the screw 330 with a lead angle larger than that of the second main flight 372, and is connected to the first main flight 371 adjacent to the tip end side.

The first sub-flight 375 and the second sub-flight 376 extend from the axially same position of the compression zone B of the screw 330 toward the tip end side of the screw 330 and is terminated at a position near of an inlet of the metering zone C. The first sub-flight 375 and the second sub-flight 376 are disposed with a phase difference of 180°.

Accordingly, positional relationships between the main flights 371 and 372 and the sub-flights 375 and 376 are as shown in Fig. 4. In Fig. 4, the positional relationships between the main flights 371 and 372 and the sub-flights 375 and 376 at axially different positions of the screw 330 are shown in six stages of (a) to (f) . In each drawing of Fig. 4, cross sections of the screw 330 and the cylinder 310 when viewed from the base end side at a predetermined axial position of the screw 330 are shown. In Fig. 4, for convenience of description, positions of the first main flight 371 and the second main flight 372 are set to the same as each other in each drawing. The position shown in Fig. 4(a) is a position on the most base end side and is a position at which the sub-flights are not derived. The first sub-flight 375 and the second sub-flight 376 are respectively derived from the first main flight 371 and the second main flight 372 in a position between Fig. 4(a) and Fig. 4(b), and as shown in Figs. 4 (b) to 4(f), the first sub-flight 375 and the second sub-flight 376 respectively approaches the second main flight 372 and the first main flight 371 while being respectively separated from the first main flight 371 and the second main flight 372 in the counterclockwise direction. In addition, at a position of the tip end side from the Fig. 4(f), the first sub-flight 375 and the second sub-flight 376 respectively combine with the second main flight 372 and the first main flight 371 and are terminated.

As shown in Fig. 5, the first groove 373 is divided into a region 377 of an unmelted portion (solid bed) on the tip end side and a region 378 of a melted portion (melt pool) on the base end side by the first sub-flight 375. The second groove 374 is divided into a region 379 of an unmelted portion (solid bed) on the tip end side and a region 380 of a melted portion (melt pool) on the base end side by the second sub-flight 376. As shown Fig. 5, the regions 377 and 379 of the unmelted portions are gradually narrowed toward the tip end side of the screw 330. On the other hand, the regions 378 and 380 of the melted portion are gradually widened toward the tip end side of the screw 330.

The first sub-flight 375 and the second sub-flight 376 separate the resin transported forward along the first grooves 373 and the second grooves 374 into the melted portion (melt pool) and the unmelted portion (solid bed) (barrier effect). In addition, when the resin overrides the first sub-flight 375 and the second sub-flight 376, shearing force is applied to the resin, and thus, dispersion of the resin is improved.

Next, effects of the screw 330 according to the first example not being part of the invention will be described. The screw 330 of the first example not being part of the invention includes the two main flights 371 and 372 and two sub-flights 375 and 376. The sub-flights 375 and 376 branch from the corresponding one of the main flights 371 and 372, extend toward the tip end side of the screw 330, and are connected to the other thereof adjacent to the tip end side. More specifically, the first sub-flight 375 branches from the first main flight 371, extends to the tip end side of the screw 330, and is connected to the second main flight 372 adjacent to the tip end side. The second sub-flight 376 branches from the second main flight 372, extends to the tip end side of the screw 330, and is connected to the first main flight 371 adjacent to the tip end side.

The two main flights are formed, a flow path width is narrowed, and thus, the resin is rapidly turned. Accordingly, heat from the cylinder is effectively transmitted to the resin. For this reason, efficiency of heat transmission increases, and the resin can be more rapidly melted. In addition, the sub-flight is provided in each main flight on a transport path from the base end side of the screw 330 to the tip end side thereof, and thus, final melting and kneading of the resin are performed to homogenize the resin. Accordingly, unmelted resin is less likely to be discharged from the injection unit 300. Therefore, itispossible to improve melting ability of the injection unit 300.

In addition, in the present embodiment, the "unmelted state" means a state in which the resin in the injection unit 300 contains the unmelted resin of a predetermined amount or more . For example, in order to obtain a threshold value for determining the unmelted state, a ratio (area, number, or the like) of the unmelted resin with respect to a purge resin in a photographed image when purging is performed under molding conditions which can manufacture a normal molding product is obtained in advance, and this ratio can be used as the threshold value. In addition, the "unmelted resin" means a resin which has a viscosity of a predetermined level or more and is relatively hard with respect to the melted resin.

In this way, the melting ability of the injection unit 300 is improved, and thus, it is possible to increase the rotating speed of the screw 330 while suppressing the discharge of the unmelted resin and increase the transport capacity of the molding material. As a result, a plasticizing time is reduced, and high cycle molding becomes possible.

In addition, kneading properties of the resin are improved by the above-described configuration, and thus, even if the set temperature of the cylinder 310 decreases and an average temperature of the resin to be discharged decreases, there is no uneven temperature in the resin, and the unmelted resin is not easily discharged. Accordingly, the temperature of the resin injected from the injection unit 300 into the mold can decrease, a cooling time of the mold can be shortened, which is effective for the high cycle molding.

Hereinbefore, in the screw 330 of the first example not being part of the invention, it is possible to improve the melting ability, and it is possible to decrease the temperature of the transported molding material.

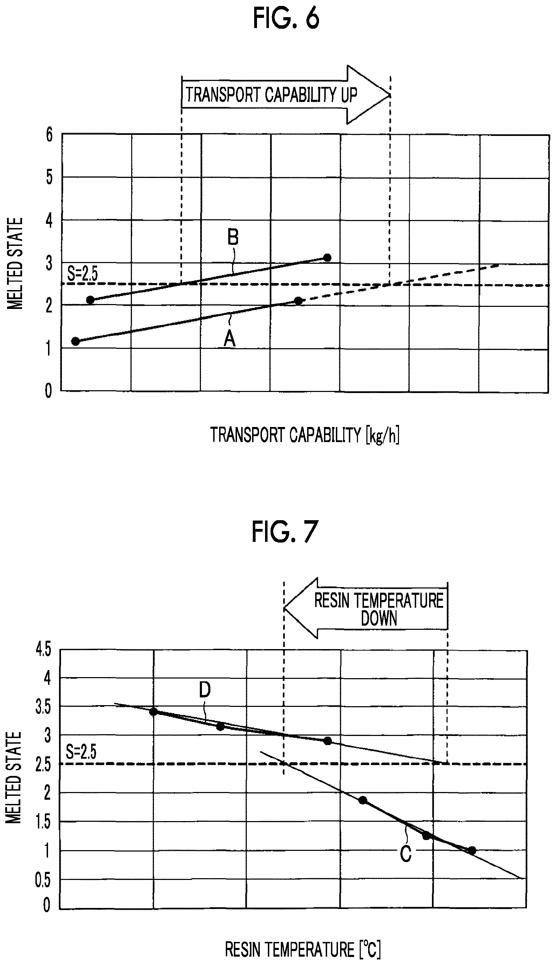

Here, effects of the screw 330 of the first example not being part of the invention are further described with reference to Figs. 6 and 7. Fig. 6 is a graph in which the transport capacity of the screw 330 of the first embodiment and transport capacity of a single-flight screw of the related art are compared with each other. Fig. 7 is the resin temperature in the screw 330 of the first embodiment and a resin temperature of the single-flight screw of the related art are compared with each other.

A horizontal axis in Fig. 6 indicates the transport capacity (kg/h) of the injection unit 300 and a vertical axis in Fig. 6 indicates the melted state of the resin. Similarly to the unmelted state, the melted state is an index indicating the extent to which the resin in the injection unit 300 contains the unmelted resin. The smaller a numerical value of the melted state is, the smaller the ratio of unmelted resin is. In addition, the larger the numerical value of melted state is, the larger the ratio of unmelted resin is. In the present example, based on a sensory evaluation using the image of the purge resin discharged from the injection unit 300, 2.5 is set as a melted state permissible value. That is, when the numerical value of the melted state is 2.5 or less, it can be determined that the state is in an appropriate melted state.

Two kinds of rotating speeds of the screw 330 are set, and the numerical value of the melted state and the transport capacity in each rotating speed are calculated. In Fig. 6, a graph A indicates an experimental result when the screw 330 of the first example not being part of the invention is used, and a graph B indicates an experimental result when the single-flight screw which is a comparative example is used. In addition, the melted state permissible value is indicated by a dotted line. As shown in Fig. 6, the graph A is disposed to be approximately parallel to the graph B and below (in a direction in which the melted state is good) the graph B, and thus, the maximum value of the transport capacity of the graph A in a range satisfying the melted state permissible value is higher relative to that of the graph B. That is, from the result of Fig. 6, it is understood that the transport capacity of the injection unit 300 in a case where the screw 330 of the first example not being part of the invention is used is further improved than that in a case where the single-flight screw is used.

In Fig. 7, a horizontal axis indicates the resin temperature (°C) of the injection unit 300. A vertical axis of Fig. 7 indicates the melted state of the resin similarly to the Fig. 6.

Three kinds of set temperatures of the cylinder 310 are set, and the numerical value of the melted state and the resin temperature in each set temperature are calculated. Similarly to Fig. 6, in Fig. 7, an experimental result of the screw 330 of the first embodiment is indicated by a graph C, an experimental result of the single-flight screw is indicated by a graph D, and the melted state permissible value is indicated by a dotted line. As shown in Fig. 7, the graph C is disposed below (in the direction in which the melted state is good) the graph D, and thus, the minimum value of the resin temperature of the graph A in the range satisfying the melted state permissible value is lower relative to that of the graph D. That is, from the result of Fig. 7, it is understood that the resin temperature of the injection unit 300 in a case where the screw 330 of the first embodiment is used can be lower than that in a case where the single-flight screw is used.

In addition, in the screw 330 of the first example not being part of the invention, the first sub-flight 375 and the second sub-flight 376 are disposed to have the same 180° phase difference from each other and extend from the axially same position of the screw 330 toward the tip end side of the screw 330. According to this configuration, a balance in the disposition between the main flights and the sub-flights of the screw 330 is improved, and run-out stability of the screw 330 can be improved.

### Embodiment according to the invention

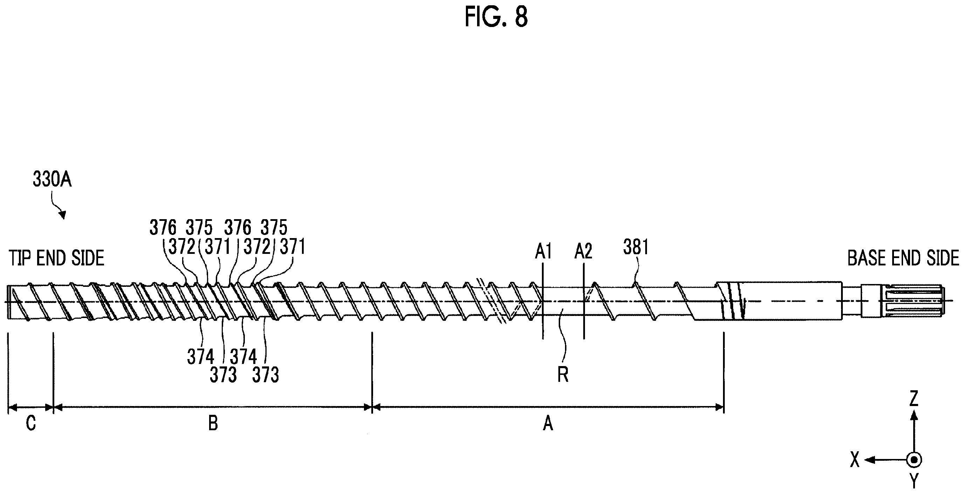

An embodiment according to the invention will be described with reference to Fig. 8. Fig. 8 is a view showing a schematic configuration of a molding machine screw 330A according to the embodiment according to the invention.

As shown in Fig. 8, the screw 330A of the embodiment according to the invention is different from the screw 330 of the first example not being part of the invention in that the two main flights 371 and 372 are provided from an intermediate position A1 of the feeding zone A to the tip end side of the screw 330A, one base end flight 381 is provided on the base end side of the feeding zone A, and a region R without flight is provided between the base end flight 381 and the main flights 371 and 372.

The first main flight 371 and the second main flight 372 extend from the axially same position A1 of the screw 330A toward the tip end side of the screw 330A.

The one base end flight 381 is provided in a section from a position A2 positioned on the base end side of the screw 330A from the position A1 to the base-side end portion of the feeding zone A. As described above, the screw 330A is disposed to be movable forward or rearward in the cylinder 310 of the injection unit 300. However, the base end flight 381 is provided such that a portion thereof is positioned immediately below the supply port 311 always even when the screw 330A is positioned at any position in the forward or rearward direction in the cylinder 310.

The region R without flight in which the flight is not formed on the screw 330A is provided between the two main flights 371 and 372 and the one base end flight 381, that is, the section from the axial position A1 of the screw 330A to the axial position A2.

In the embodiment according to the invention the solid resin pellet (molding material) supplied from the supply port 311 of the cylinder 310 is transported to the tip end side by the base end flight 381 and reaches the region R without flight at the position A2, the solid resin pellet temporarily stays in the region R. The pellet enters the first groove 373 or the second groove 374 at the position A1 and is transported to the compression zone B by the first main flight 371 or the second main flight 372.

In this way, in the screw 330A of the embodiment according to the invention one base end flight 381 is provided in the portion immediately below the supply port 311 of the cylinder 310, and thus, a resin flow path immediately after the pellet is supplied from the supply port 311 is widened, and it is possible to increase the transport capacity. Accordingly, it is possible to prevent the pellet from staying in the vicinity of the supply port 311.

In addition, the region R without flight is provided between the base end flight 381 and the main flights 371 and 372 and the two main flights 371 and 372 are simultaneously formed at the tip end side position A1 of the region R. Accordingly, after the pellet transported by the base end flight 381 temporarily stays in the region R without flight, the pellet can be evenly loaded on the first groove 373 and the second groove 374. The pellet is evenly loaded on the first groove 373 and the second groove 374, and thus, the melting of the molding material in the first groove 373 and the second groove 374 can be performed under the same conditions, and it is possible to promote the homogenization of the finally melted resin.

Hereinbefore, the embodiments are described with reference to specific examples. However, the present disclosure is not limited to these specific examples. Those obtained by applying appropriately design modifications to these specific examples by a person skilled in the art are also included within the scope of the present disclosure as long as they have the features of the present disclosure. The elements, the dispositions thereof, the conditions, the shapes, and the like of each specific example described above are not limited to those exemplified and can be appropriately modified. Each element included in each of the above-described specific examples can be appropriately changed in combination as long as no technical inconsistency occurs.

In the above-described embodiments, the configuration is described in which the first sub-flight 375 and the second sub-flight 376 are derived from the axially same positions of the screws 330 and 330A and are disposed to have the phase difference of 180°. The start positions of the first sub-flight 375 and the second sub-flight 376 may be shifted from each other in the axial direction of each of the screws 330 and 330A. In addition, the phase difference between the first sub-flight 375 and the second sub-flight 376 may be other than 180°.

Multiple main flights and multiple sub-flight such as three or more main flights or sub-flights maybe provided. For example, in a case where three main flights and three sub-flights are provided, three sub-flights are respectively provided between the first main flight and the second main flight, between the second main flight and a third main flight, and between the third main flight and the first main flight.

It is preferable that the positions at which the sub-flights 375 and 376 are provided in the screws 330 and 330A are positions in the compression zone B. However, the sub-flight 375 and 376 may be provided in the metering zone C or the feeding zone A.

The screws 330 and 330A of the above-described embodiments can be applied not only to injection molding but also to extrusion molding.

### Brief Description of the Reference Symbols

330, 330A: screw (molding machine screw)
371: first main flight
372: second main flight
375: first sub-flight
376: second sub-flight
381: base end flight
A: feeding zone
B: compression zone
C: metering zone
R: region without flight

## Claims

1. A molding machine screw (330A), comprising:
a plurality of main flights (371, 372); and
a plurality of sub-flights (375, 376) each of which branches from corresponding one main flight of the main flights (371, 372), extends toward a tip end side of the molding machine screw (330A), and is connected to other main flight adjacent to the tip end side,
**characterized in that** the molding machine screw (330A) is divided into a feeding zone (A), a compression zone (B), and a metering zone (C) from a base end side,
wherein the main flight is provided from an intermediate position of the feeding zone (A) to the tip end side of the molding machine screw (330A),
wherein one base end flight (381) is provided on the base end side of the feeding zone (A), and
wherein a region (R) without flight is provided between the main flight and the base end flight (381).

2. The molding machine screw (330A) according to claim 1,
wherein the sub-flights (375, 376) are disposed to have the same phase difference as each other.

3. The molding machine screw (330A) according to claim 1 or 2,
wherein the sub-flights (375, 376) extend from the axially same position of the molding machine screw (330A) to the tip end side of the molding machine screw (330A).

4. The molding machine screw (330A) according to any one of claims 1 to 3,
wherein two main flights (371, 372) and two sub-flights (375, 376) are provided.

## Patentansprüche

1. Formmaschinenschnecke (330A), umfassend:
mehrere Hauptgänge (371, 372); und
mehrere Nebengänge (375, 376), von denen jeder von einem entsprechenden Hauptgang der Hauptgänge (371, 372) abzweigt, sich zu einer Spitzenendseite der Formmaschinenschnecke (330A) hin erstreckt und mit einem anderen Hauptgang benachbart zu der Spitzenendseite verbunden ist,
**dadurch gekennzeichnet, dass** die Formmaschinenschnecke (330A) von einer Basisendseite aus in eine Zuführzone (A), eine Kompressionszone (B) und eine Dosierzone (C) unterteilt ist,
wobei der Hauptgang von einer Zwischenposition der Zuführzone (A) bis zu der Spitzenendseite der Formmaschinenschnecke (330A) vorgesehen ist,
wobei ein Basisendgang (381) an der Basisendseite der Zuführzone (A) vorgesehen ist, und
wobei zwischen dem Hauptgang und dem Basisendgang (381) ein Bereich (R) ohne Gang vorgesehen ist.

2. Formmaschinenschnecke (330A) nach Anspruch 1,
wobei die Nebengänge (375, 376) so angeordnet sind, dass sie die gleiche Phasendifferenz zueinander aufweisen.

3. Formmaschinenschnecke (330A) nach Anspruch 1 oder 2,
wobei sich die Nebengänge (375, 376) von der axial gleichen Position der Formmaschinenschnecke (330A) bis zu der Spitzenendseite der Formmaschinenschnecke (330A) erstrecken.

4. Formmaschinenschnecke (330A) nach einem der Ansprüche 1 bis 3,
wobei zwei Hauptgänge (371, 372) und zwei Nebengänge (375, 376) vorgesehen sind.

## Revendications

1. Un vis de machine de moulage (330A) comprenant :
une pluralité de filets principaux (371, 372) ; et
une pluralité de sous-filets (375, 376), dont chacune des branches d'un filet principal correspondant des filets principaux (371, 372), s'étend vers un côté d'extrémité de pointe de la vis de machine de moulage (330A), et est raccordée à l'autre filet principal adjacent au côté d'extrémité de pointe,
**caractérisée en ce que** la vis de machine de moulage (330A) est divisée en une zone d'alimentation (A), en une zone de compression (B) et en une zone de mesure (C) à partir d'un côté d'extrémité de base,
dans laquelle le filet principal est prévu à partir d'une position intermédiaire de la zone d'alimentation (A) jusqu'au côté d'extrémité de pointe de la vis de machine de moulage (330A),
dans laquelle un filet d'extrémité de base (381) est prévu sur le côté d'extrémité de base de la zone d'alimentation (A), et
dans laquelle une région (R) sans filet est prévue entre le filet principal et le filet d'extrémité de base (381).

2. La vis de machine de moulage (330A) selon la revendication 1,
dans laquelle les sous-filets (375, 376) sont disposés pour avoir la même différence de phase que les uns par rapport aux autres.

3. La vis de machine de moulage (330A) selon la revendication 1 ou 2,
dans laquelle les sous-filets (375, 376) s'étendent à partir de la même position axiale de la vis de machine de moulage (330A) au côté d'extrémité de pointe de la vis de machine de moulage (330A).

4. La vis de machine de moulage (330A) selon l'une quelconque des revendications 1 à 3,
dans laquelle deux filets principaux (371, 372) et deux sous-filets (375, 376) sont prévus.
